# FASCICULE DE BREVET EUROPEEN

(11) **EP 1 886 048 B1**
(45) Date de publication et mention de la délivrance du brevet: **26.10.2011**
(21) Numéro de dépôt: 06755528.4
(22) Date de dépôt: 29.05.2006
(51) Int. Cl.: F16J 15/32, F16C 33/78

(54) **DISPOSITIF D' ETANCHEITE POUR PALIER A ROULEMENT COMPRENANT UN MOYEN D' IDENTIFICATION**
DICHTUNGSVORRICHTUNG FÜR WÄLZLAGER MIT IDENTIFIKATIONSMITTELN
SEALING DEVICE FOR ANTIFRICTION BEARING COMPRISING IDENTIFYING MEANS

(30) Priorité: 31.05.2005 FR 0505506
(43) Date de publication de la demande: 13.02.2008
(73) Titulaire: S.N.R. ROULEMENTS, 74000 Annecy (FR)
(72) Inventeur: WEBER, Marc-Alain, F-74000 Annecy (FR)
(74) Mandataire: Broydé, Marc
(86) Numéro de dépôt international: PCT/FR2006/001209
(87) Numéro de publication internationale: WO 2006/129000

(56) Documents cités:
- EP-A- 1 156 234
- EP-A- 1 615 091
- WO-A-2005/052397

## Description

L'invention concerne un dispositif d'étanchéité pour un palier à roulement comprenant un support fixe et un support tournant, ainsi qu'un tel palier, notamment un roulement, comprenant un tel dispositif pour étanchéifier latéralement l'espace de roulement.

Dans le domaine des paliers à roulement, le développement des exigences en termes de maintenance et de traçabilité impose de pouvoir bénéficier de façon routinière d'informations relatives notamment à la fabrication, à l'origine, aux caractéristiques et/ou aux conditions de fonctionnement d'un palier.

Pour ce faire, le document WO-A1-02/101675 prévoit de disposer un transpondeur équipé d'une antenne dans un logement formé dans une bague d'un roulement. Le transpondeur, en pouvant enregistrer et émettre des informations relatives au roulement, permet de satisfaire aux exigences mentionnées ci-dessus.

Toutefois, cette réalisation ne donne pas entièrement satisfaction en ce que l'environnement métallique au niveau du logement nuit aux performances de communication du transpondeur avec le détecteur destiné à être positionné à distance. En effet, la propagation des ondes radio à travers le métal induit une perturbation importante du signal de communication, ce qui impose des contraintes de positionnement du transpondeur et/ou de positionner le détecteur à distance très faible du transpondeur, voir en contact avec lui, pour fiabiliser la communication. En outre, la réalisation du logement dans la bague n'est pas satisfaisante tant mécaniquement qu'économiquement.

Le document WO-A1-2004/072747 décrit la possibilité de disposer un transpondeur sur un joint d'étanchéité d'un roulement. Toutefois, comme dans le document précédent, l'antenne de communication présente une géométrie qui ne permet pas de fiabiliser la communication.

L'invention vise notamment à résoudre les problèmes mentionnés ci-dessus en proposant notamment un dispositif d'étanchéité pour un palier à roulement qui intègre de façon particulière un moyen d'identification particulier, de sorte, compte tenu de l'environnement métallique sévère présent dans les paliers, à améliorer la fiabilité de la communication entre le moyen d'identification et le détecteur.

A cet effet, et selon un premier aspect, l'invention propose un dispositif d'étanchéité pour un palier à roulement comprenant un support fixe définissant un axe de rotation et un support tournant, ledit dispositif d'étanchéité comprenant une armature métallique destinée à être associée à un support dudit palier et un joint d'étanchéité, ladite armature comprenant une portée annulaire et, solidaire de ladite portée, un moyen d'identification électronique formé d'un transpondeur branché sur une antenne de communication, dans lequel l'antenne présente, par rapport à l'axe de rotation, une géométrie au moins semi annulaire ou annulaire qui est agencée pour venir en regard de la portée, le moyen d'identification étant solidarisé à ladite portée par l'intermédiaire d'une couche de matériau isolant qui est interposée entre l'antenne et la portée de sorte à isoler électromagnétiquement ladite antenne.

Selon un deuxième aspect, l'invention propose un palier à roulement, notamment un roulement, comprenant un support fixe, un support tournant et des corps roulants disposés entre lesdits supports pour permettre la rotation relative desdits supports, ledit palier comprenant en outre un tel dispositif d'étanchéité, l'armature étant associée à l'un des supports de sorte à étanchéifier latéralement l'espace de roulement formé entre lesdits supports.

D'autres objets et avantages de l'invention apparaîtront au cours de la description qui suit, faite en référence aux dessins annexés, dans lesquels :
- la figure 1 est une représentation schématique de face d'un moyen d'identification comprenant un transpondeur branché sur une antenne de communication, ledit moyen étant surmoulé dans un matériau isolant ;
- les figures 2 à 4 sont des représentations partielles en coupe longitudinale d'un roulement équipé d'un dispositif d'étanchéité intégrant le moyen d'identification de la figure 1, selon respectivement trois modes de réalisation de l'invention.

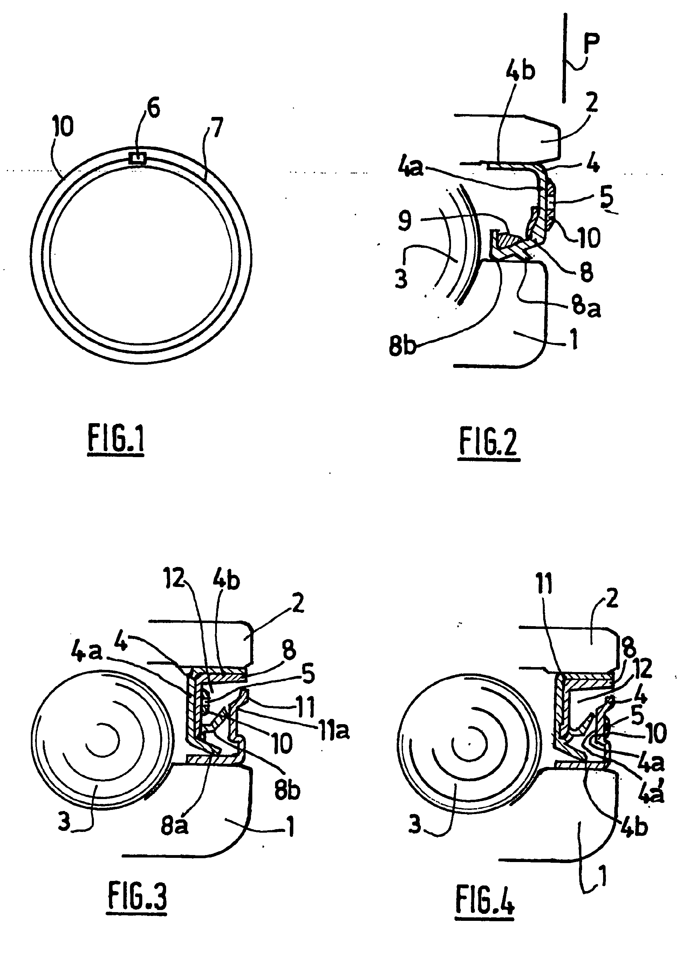

En relation avec les figures 2 à 4, on décrit un roulement à billes comprenant une bague intérieure 1, une bague extérieure 2 et des billes 3 disposées entre lesdites bagues de sorte à permettre la rotation relative desdites bagues. L'invention n'est pas limitée à un roulement de ce type, mais concerne également tous types de paliers à roulement comprenant un support fixe et un support tournant, les corps roulants pouvant en outre présenter une géométrie autre que sphérique, par exemple sous la forme de rouleaux ou d'aiguilles.

Le roulement comprend un dispositif d'étanchéité qui est disposé coaxialement aux bagues 1, 2 de sorte à étanchéifier latéralement l'espace de roulement formé entre lesdites bagues. Sur les figures 2 à 4, est représenté un seul côté du roulement sur lequel le dispositif d'étanchéité est prévu, l'autre côté pouvant être équipé d'un dispositif d'étanchéité connu ou d'un autre dispositif d'étanchéité selon l'invention, identique ou différent de ceux représentés. En particulier, on peut prévoir que le dispositif d'étanchéité non représenté soit d'un type connu intégrant un codeur magnétique multipolaire de sorte à bénéficier notamment d'un signal de position angulaire de la bague tournante par rapport à la bague fixe.

Le ou les dispositif(s) d'étanchéité permet(tent) d'isoler l'espace de roulement dans lequel les billes 3 sont disposées, tant de l'environnement extérieur potentiellement polluant que d'éventuelles fuites du lubrifiant qui est contenu dans l'espace de roulement.

On décrit ci-dessous, les trois modes de réalisation d'un dispositif d'étanchéité qui sont représentés sur les figures 2 à 4, ledit dispositif comprenant une armature métallique 4 qui est associée à une bague 1, 2 du roulement et un joint d'étanchéité. En outre, le dispositif d'étanchéité comprend un moyen d'identification électronique 5 qui est formé d'un transpondeur 6 branché sur une antenne de communication 7.

La figure 1 représente un tel moyen d'identification 5 formé d'une étiquette radiofréquence de type RFID (Radio Frequency Identification) qui présente notamment l'avantage de permettre la lecture et l'enregistrement à distance d'informations dans le transpondeur 6 formé d'une puce électronique.

Dans le domaine des paliers à roulement, les informations échangées peuvent concerner notamment la fabrication du palier, son origine, ses caractéristiques propres (plages de fonctionnement en température, vitesse de rotation maximum, charges admissibles,...), son état d'usure et/ou les conditions de fonctionnement dudit palier ou du montage dans lequel il est intégré. En particulier, ces informations peuvent être utilisées dans le cadre de la maintenance, de la traçabilité ou du fonctionnement du palier.

Selon le mode de réalisation représenté, le moyen d'identification 5 comprend une antenne annulaire métallique 7 sur laquelle est branchée au moyen de fils une puce électronique 6, en variante non représentée, l'antenne 7 peut présenter une géométrie au moins semi annulaire, notamment semi annulaire, avec la puce 6 par exemple branchée en partie centrale. L'antenne 7 et la puce 6 sont choisies en fonction des contraintes d'utilisation, notamment en ce qui concerne les distances et les fréquences de communication.

De façon connue, ce type de moyen d'identification 5 est destiné à communiquer sans contact avec un détecteur fixe spécifique (non représenté) qui peut être extérieur au roulement, ou encore intégré à lui. Le détecteur assure la lecture / écriture des informations, lesdites informations étant ensuite utilisables soit dans un système propre au montage intégrant le palier, soit dans un système extérieur audit montage. De façon préférentielle, le moyen d'identification est de type passif, c'est-à-dire qu'il n'intègre pas de source d'énergie propre, toutefois un moyen d'identification actif peut être envisagé. L'armature 4 du dispositif d'étanchéité est typiquement réalisée en tôle pliée et comprend une portée 4a sur laquelle le moyen d'identification 5 est solidarisé. En particulier, la géométrie de l'antenne 7 est agencée pour venir en regard de la portée 4a, soit de la totalité de celle-ci dans le cas d'une antenne 7 annulaire soit sur une portion circonférentielle de celle-ci dans le cas d'une antenne 7 au moins semi annulaire.

Cette réalisation permet d'assurer un support mécanique au moyen d'identification 5, ce qui est avantageux compte tenu de sa fragilité notamment du fait de la taille de son antenne 7 par rapport à son diamètre. En effet, l'antenne 7 est typiquement formée d'une couronne fine de matériau conducteur électrique. En particulier le diamètre de l'antenne 7 est égal au diamètre médian de la portée 4a, toutefois celui-ci peut varier dans une certaine plage si la largeur de la portée 4a est supérieure à celle de l'antenne 7.

En outre, l'invention prévoit d'isoler électromagnétiquement l'antenne 7 de l'armature métallique 4a de sorte à limiter les pertes de fiabilité du signal de communication en cas de contact direct entre celle-ci et une partie métallique. Pour ce faire, on prévoit d'interposer une couche d'un matériau isolant électromagnétiquement entre l'antenne 7 et la portée 4a.

En outre, l'armature 4 forme une masse métallique moins importante qu'une bague 1, 2 du roulement, de sorte que la disposition de l'antenne 7 à distance desdites bagues perturbe moins le signal de communication. Par ailleurs, la réalisation selon l'invention permet d'éviter un usinage particulier du palier ainsi qu'une modification de la structure générale du palier pour intégrer le moyen d'identification 5.

Enfin, l'invention permet, au niveau de l'armature 4 du dispositif d'étanchéité, de pouvoir combiner :
- l'utilisation d'une antenne 7 particulière qui, notamment du fait de sa taille, permet une communication à longue distance (typiquement entre 5 et 10 cm) en la supportant mécaniquement par l'armature 4 afin d'éviter une éventuelle détérioration de ladite antenne ; avec
- une isolation électromagnétique en prévoyant d'interposer un matériau isolant entre l'armature 4 et l'antenne 7.

Selon le premier mode de réalisation (figure 2), l'armature 4 comporte une portée 4a sensiblement radiale qui est reliée avec une portée axiale 4b s'étendant vers l'intérieur du roulement pour l'emmanchement de l'armature 4 sur une paroi intérieure de la bague extérieure 2.

Le joint d'étanchéité comprend un élément élastomérique 8 qui est surmoulée sur l'extrémité libre de la portée radiale 4a. L'élément élastomérique 8, par exemple en VITON, acrylonitrile ou analogue, comporte une partie libre qui est en appui frottant sur une paroi de la bague intérieure 1. En particulier, un moyen de contrainte formé d'un ressort annulaire 9 est associé à la partie libre de sorte à appliquer une lèvre externe 8a et une lèvre interne 8b de ladite partie sur la paroi de la bague intérieure 2.

Dans cette réalisation, l'élément élastomérique 8 est associé à l'armature 4 à distance de la portée radiale 4a, de sorte à laisser la surface externe de celle-ci libre. Le moyen d'identification 5 est associé sur ladite partie libre au moyen du matériau isolant, par exemple au moyen d'un matériau polymérique.

Dans le mode de réalisation représenté, le moyen d'identification 5 est surmoulé sur la portée par un matériau isolant 10 qui peut être le même ou différent de celui formant l'élément élastomérique 8. Le surmoulage 10 présente l'avantage de conférer une protection mécanique au moyen d'identification 5, notamment vis-à-vis des éventuels contacts endommageant qu'il pourrait subir lors de l'utilisation du palier et/ou lors de la communication. En variante, on pourrait prévoir de coller le moyen d'identification 5 avec une couche de matériau isolant adhésif, ou de coller un moyen d'identification 5 préalablement surmoulé.

Dans le mode de réalisation de la figure 2, le moyen d'identification 5 est disposé sensiblement dans le plan P des faces latérales de chacune des bagues 1, 2. Ainsi, le moyen d'identification 5 est positionné au plus près de l'extérieur du roulement, ce qui permet d'améliorer son accessibilité vis-à-vis de la communication depuis l'extérieur dudit roulement, tout en assurant une protection mécanique de celui-ci du fait de son positionnement à l'intérieur de l'espace formé entre les bagues 1, 2.

Selon le deuxième mode de réalisation (figure 3), l'armature 4 comprend une portée axiale extérieure 4b d'emmanchement et une portée radiale 4a qui est disposée à l'intérieur de l'espace de roulement, à distance de la face latérale des bagues 1, 2.

Le joint d'étanchéité comprend un élément élastomérique 8 qui est surmoulé sur l'armature 4 de sorte à recouvrir les faces externes de l'armature 4 et à présenter une partie libre d'étanchéité. En particulier, la partie libre comprend deux lèvres, respectivement intérieure 8a et extérieure 8b qui sont en appui frottant sur des faces internes d'une deuxième armature 11 qui est emmanchée sur la bague intérieure 1.

Dans cette réalisation, le moyen d'identification 5 est associé sur l'élément élastomérique 8, la couche de celui-ci qui est prévue sur la portée radiale 4a formant couche de matériau isolant pour l'antenne 7. Sur la figure 3, le moyen d'identification 5 est également surmoulé et collé sur l'élément élastomérique 8, ce qui augmente l'isolation électromagnétique dans le cas où le surmoulage 10 est isolant.

En variante, on peut prévoir d'associer directement le moyen d'identification 5 sur l'élément élastomérique 8, par exemple par collage, ou encore de surmoulé ledit moyen dans l'élément élastomérique 8 en même temps que l'armature 4. Cette dernière réalisation permet, du fait du caractère élastique de l'élément 8, d'améliorer la protection mécanique du moyen d'identification 5, outre l'isolation électromagnétique conférée.

Selon le troisième mode de réalisation (figure 4), le dispositif d'étanchéité présente la même structure que celui de la figure 3, à savoir deux armatures 4, 11 emmanchées respectivement sur une bagues 1, 2 de sorte à former une chambre annulaire 12 entre elles dans laquelle l'étanchéité est réalisé.

L'élément élastomérique 8 est associé à l'armature interne 11 pour être en contact frottant avec l'armature externe 4 à l'intérieur de la chambre 12. Toutefois, dans cette troisième réalisation, le moyen d'identification 5 est associé à l'armature externe 4.

L'armature externe 4 comprend une portée axiale 4b d'emmanchement sur une paroi intérieure de la bague intérieure 1 et une paroi externe 4a sensiblement radiale sur laquelle le moyen d'identification 5 est associé par surmoulage d'un matériau isolant 10 conformément au premier mode de réalisation.

La paroi externe 4a comprend un renfoncement axial interne 4a' dans lequel le moyen d'identification 5 est disposé de sorte à le protéger mécaniquement par les saillies annulaires formées autour du renfoncement 4a'. En effet, cette réalisation permet de limiter tout contact direct sur le moyen d'identification 5.

Dans les réalisations décrites ci-dessus, on peut prévoir que la bague qui est solidaire du moyen d'identification 5 soit tournante ou fixe, la géométrie de l'antenne 7 permettant d'assurer une bonne communication dans ces deux cas de figure, tout en assurant une protection mécanique optimale dudit moyen d'identification vis-à-vis des agressions subies lors de l'utilisation du palier.

En outre, le moyen d'identification 5 est positionné à l'extérieur du dispositif d'étanchéité, c'est-à-dire qu'il n'est pas en contact direct avec l'intérieur de l'espace de roulement, ce qui améliore également sa protection.

Toujours dans ce but de protection, on peut prévoir de modifier le mode de réalisation de la figure 3 en prévoyant d'associer une lèvre d'étanchéité à l'armature externe 11, ladite lèvre étant en contact frottant sur l'armature interne 4 de sorte à étanchéifier la chambre annulaire 12, et donc le moyen d'identification, par rapport à l'extérieur du roulement

## Revendications

1. Dispositif d'étanchéité pour un palier à roulement comprenant un support fixe (1, 2) définissant un axe de rotation et un support tournant (2, 1) autour de l'axe de rotation, ledit dispositif d'étanchéité comprenant une armature métallique (4) destinée à être associée à un support (1, 2) dudit palier et un joint d'étanchéité, ladite armature comprenant une portée annulaire (4a) et, solidaire de ladite portée, un moyen d'identification électronique (5) formé d'un transpondeur (6) branché sur une antenne de communication (7), ledit dispositif d'étanchéité étant **caractérisé en ce que** l'antenne (7) présente, par rapport à l'axe de rotation, une géométrie au moins semi annulaire ou annulaire qui est agencée pour venir en regard de la portée (4a), le moyen d'identification (5) étant solidarisé à ladite portée (4a) par l'intermédiaire d'une couche de matériau isolant (8, 10) qui est interposée entre l'antenne (7) et la portée (4a) de sorte à isoler électromagnétiquement ladite antenne.

2. Dispositif d'étanchéité selon la revendication 1, **caractérisé en ce que** le moyen d'identification (5) est formé d'une étiquette radiofréquence de type RFID.

3. Dispositif d'étanchéité selon la revendication 1 ou 2, **caractérisé en ce que** le joint d'étanchéité comprend un élément élastomérique (8) qui est associé à l'armature (4).

4. Dispositif d'étanchéité selon la revendication 3, **caractérisé en ce que** l'élément élastomérique (8) est associé à l'armature (4) à distance de la portée (4a), le moyen d'identification (5) étant collé ou surmoulé sur la portée (4a) avec le matériau isolant.

5. Dispositif d'étanchéité selon la revendication 3, **caractérisé en ce que** l'élément élastomérique (8) est associé sur la portée (4a), la couche de matériau isolant étant formée par une couche dudit élément.

6. Dispositif d'étanchéité selon la revendication 5, **caractérisé en ce que** le moyen d'identification (5) est surmoulé dans l'élément élastomérique (8).

7. Dispositif d'étanchéité selon la revendication 5, **caractérisé en ce que** le moyen d'identification (5) est associé sur l'élément élastomérique (8).

8. Dispositif d'étanchéité selon l'une quelconque des revendications 3 à 7, **caractérisé en ce que** le joint d'étanchéité comprend en outre une deuxième armature (11) qui est destinée à être associée à l'autre support du palier, les armatures (4, 11) étant agencées pour former une chambre annulaire (12) entre elles, l'élément élastomérique (8) étant en contact frottant sur la deuxième armature (11).

9. Dispositif d'étanchéité selon la revendication 1 ou 2, **caractérisé en ce qu'**il comprend une deuxième armature (11) qui est destinée à être associée à l'autre support du palier, les armatures (4, 11) étant agencées pour former une chambre annulaire (12) entre elles, le joint d'étanchéité comprenant un élément élastomérique (8) qui est associé à la deuxième armature (11) de sorte à être en contact frottant sur l'armature (4), le moyen d'identification (5) étant collé ou surmoulé sur la portée (4a) avec le matériau isolant.

10. Dispositif d'étanchéité selon l'une quelconque des revendications 1 à 9, **caractérisé en ce qu'**il incorpore un codeur magnétique multipolaire qui est solidaire d'une armature (4, 11).

11. Palier à roulement, notamment roulement, comprenant un support fixe (1, 2), un support tournant (2, 1) et des corps roulants (3) disposés entre lesdits supports pour permettre la rotation relative desdits supports, ledit palier comprenant en outre un dispositif d'étanchéité selon l'une quelconque des revendications 1 à 10, l'armature (4) étant associée à l'un des supports (1, 2) de sorte à étanchéifier latéralement l'espace de roulement formé entre lesdits supports.

12. Palier à roulement selon la revendication 11, **caractérisé en ce que** le transpondeur (5) est agencé pour enregistrer et transmettre des informations relatives à la fabrication du palier, à son origine, à ses caractéristiques propres, à son état d'usure et/ou aux conditions de fonctionnement dudit palier.

13. Palier à roulement selon la revendication 11 ou 12, **caractérisé en ce que** la portée (4a) s'étend radialement, le moyen d'identification (5) étant disposé sensiblement dans le plan P de la face latérale d'au moins un support (1, 2).

14. Palier à roulement selon l'une quelconque des revendications 11 à 13, **caractérisé en ce qu'**il comprend en outre un deuxième dispositif d'étanchéité intégrant un codeur magnétique multipolaire.

## Claims

1. Sealing device for a roller bearing housingcomprising a fixed support (1, 2) defining a rotation axis and a rotary support (2, 1) rotating about the rotation axis, said sealing device comprising a metal frame (4) intended to be associated with a support (1, 2) of said roller bearing housing and a gasket, said frame comprising an annular surface (4a) and, secured to said surface, an electronic identification means (5) formed by a transponder (6) connected to a communication antenna (7), said sealing device being **characterised in that** the antenna (7) has, with respect to the rotation axis, an at least semiannular or annular geometry that is arranged to come opposite the surface (4a), the identification means (5) being secured to said surface (4a) by means of a layer of insulating material (8, 10) that is interposed between the antenna (7) and the surface (4a) so as to isolate said antenna electromagnetically.

2. Sealing device according to claim 1, **characterised in that** the identification means (5) is formed by a radio-frequency label of the RFID type.

3. Sealing device according to claim 1 or 2, **characterised in that** the gasket comprises an elastomeric element (8) that is associated with the frame (4).

4. Sealing device according to claim 3, **characterised in that** the elastomeric element (8) is associated with the frame (4) at a distance from the surface (4a), the identification means (5) being bonded to or overmoulded on the surface (4a) with the insulating material.

5. Sealing device according to claim 3, **characterised in that** the elastomeric element (8) is associated with the surface (4a), the layer of insulating material being formed by a layer of said element.

6. Sealing device according to claim 5, **characterised in that** the identification means (5) is overmoulded in the elastomeric element (8).

7. Sealing device according to claim 5, **characterised in that** the identification means (5) is associated with the elastomeric element (8).

8. Sealing device according to any one of claims 3 to 7, **characterised in that** the seal further comprises a second frame (11) that is intended to be associated with the other support of the roller bearing housing, the frames (4, 11) being arranged to form an annular chamber (12) between them, the elastomeric element (8) being in rubbing contact on the second frame (11).

9. Sealing device according to claim 1 or 2, **characterised in that** it comprises a second frame (11) that is intended to be associated with the other support of the roller bearing housing, the frames (4, 11) being arranged to form an annular chamber (12) between them, the gasket comprising an elastomeric element (8) that is associated with the second frame (11) so as to be in rubbing contact on the frame (4), the identification means (5) being bonded to or overmoulded on the surface (4a) with the insulating material.

10. Sealing device according to any one of claims 1 to 9, **characterised in that** it comprises a multi-pole magnetic coder that is secured to a frame (4, 11).

11. Roller bearing housing, in particular for a roller bearing, comprising a fixed support (1, 2), a rotating support (2, 1) and rolling bodies (3) disposed between said supports to allow relative rotation of said supports, said roller bearing housing also comprising a sealing device according to any one of claims 1 to 10, the frame (4) being associated with one of the supports (1, 2) so as to laterally seal the rolling space formed between said supports.

12. Roller bearing housing according to claim 11, **characterised in that** the transponder (5) is arranged to record and transmit information relating to the manufacture of the roller bearing housing, its origin, its inherent characteristics, its state of wear and/or the operating conditions of said roller bearing housing.

13. Roller bearing housing according to claim 11 or 12, **characterised in that** the surface (4a) extends radially, the identification means (5) being disposed substantially in the plane P of the lateral face of at least one support (1, 2).

14. Roller bearing housing according to any one of claims 11 to 13, **characterised in that** it also comprises a second sealing device integrating a multi-pole magnetic coder.

## Patentansprüche

1. Dichtvorrichtung für ein Wälzlager umfassend eine feste Halterung (1, 2), die eine Drehachse beschreibt, und eine drehende Halterung (2, 1) um die Drehachse, wobei die besagte Dichtvorrichtung eine Metallarmatur (4), die dazu bestimmt ist, einer Halterung (2, 1) des besagten Lagers zugeordnet zu werden, und eine Dichtung umfasst, wobei die besagte Armatur eine ringförmige Auflagefläche (4a) umfasst, und, fest verbunden mit der besagten Auflagefläche, eine elektronische Identifizierungsvorrichtung (5), die aus einem Transponder (6) gebildet wird, der mit einer Kommunikationsantenne (7) verbunden ist, wobei die besagte Dichtvorrichtung **dadurch gekennzeichnet ist, dass** die Antenne (7) in Bezug auf die Drehachse eine zumindest halbkreisförmige oder kreisförmige Geometrie aufweist, die so angeordnet ist, um der Auflagefläche (4a) gegenüber zu stehen, wobei die Identifizierungsvorrichtung (5) durch eine Isoliermaterialschicht (8, 10) fest mit der besagten Auflagefläche (4a) verbunden ist, die zwischen der Antenne (7) und der Auflagefläche (4a) angeordnet ist, sodass die besagte Antenne elektromagnetisch isoliert wird.

2. Dichtvorrichtung nach Anspruch 1, **dadurch gekennzeichnet, dass** die Identifizierungsvorrichtung (5) aus einem Funkfrequenz-Etikett vom Typ RFID gebildet wird.

3. Dichtvorrichtung nach Anspruch 1 oder 2, **dadurch gekennzeichnet, dass** die Dichtung ein Elastomer-Element (8) umfasst, das der Armatur (4) zugeordnet ist.

4. Dichtvorrichtung nach Anspruch 3, **dadurch gekennzeichnet, dass** das Elastomer-Element (8) der Armatur (4) auf Abstand zur Auflagefläche (4a) zugeordnet ist, wobei die Identifizierungsvorrichtung (5) mit dem Isoliermaterial auf die Auflagefläche (4a) geklebt oder gussgeformt wird.

5. Dichtvorrichtung nach Anspruch 3, **dadurch gekennzeichnet, dass** das Elastomer-Element (8) auf der Auflagefläche (4a) zugeordnet ist, wobei die die Isoliermaterialschicht durch eine Schicht des besagten Elements gebildet wird.

6. Dichtvorrichtung nach Anspruch 5, **dadurch gekennzeichnet, dass** die Identifizierungsvorrichtung (5) im Elastomer-Element (8) gussgeformt wird.

7. Dichtvorrichtung nach Anspruch 5, **dadurch gekennzeichnet, dass** die Identifizierungsvorrichtung (5) dem Elastomer-Element (8) zugeordnet ist.

8. Dichtvorrichtung nach irgendeinem der Ansprüche 3 bis 7, **dadurch gekennzeichnet, dass** die Dichtung darüber hinaus eine zweite Armatur (11) umfasst, die dazu bestimmt ist, einer anderen Halterung des Lagers zugeordnet zu werden, wobei die Armaturen (4, 11) angeordnet sind, um eine ringförmige Kammer (12) zwischen ihnen zu bilden, und das Elastomer-Element (8) in Reibkontakt zur zweiten Armatur (11) steht.

9. Dichtvorrichtung nach Anspruch 1 oder 2, **dadurch gekennzeichnet, dass** sie eine zweite Armatur (11) umfasst, die dazu bestimmt ist, der anderen Lagerhalterung zugeordnet zu werden, wobei die Armaturen (4, 11) angeordnet sind, um eine ringförmige Kammer (12) zwischen ihnen zu bilden, und die Dichtung ein Elastomer-Element (8) umfasst, das der zweiten Armatur (11) zugeordnet ist, sodass es in Reibkontakt zur Armatur (4) steht, und die Identifizierungsvorrichtung mit dem Isoliermaterial (5) auf die Auflagefläche (4a) geklebt oder gussgeformt ist.

10. Dichtvorrichtung nach irgendeinem der Ansprüche 1 bis 9, **dadurch gekennzeichnet, dass** sie einen mehrpoligen Magnetgeber beinhaltet, der fest mit einer Armatur (4, 11) verbunden ist.

11. Wälzlager, im Speziellen ein Lager, umfassend eine feste Halterung (1, 2), eine drehende Halterung (2, 1) und Wälzkörper (3), die zwischen den besagten Halterungen angeordnet sind, um die relative Verdrehung der besagten Halterungen zu ermöglichen, wobei das Wälzlager darüber hinaus eine Dichtvorrichtung nach irgendeinem der Ansprüche 1 bis 10 umfasst, und die Armatur (4) einer der Halterungen (1, 2) zugeordnet ist, sodass der Lagerinnenraum, der zwischen den besagten Halterungen gebildet wird, seitlich abgedichtet wird.

12. Wälzlager nach Anspruch 11, **dadurch gekennzeichnet, dass** der Transponder (5) angeordnet ist, um Informationen über die Herstellung des Wälzlagers, über dessen Herkunft, über seine Eigenschaften, über seinen Verschleißzustand und/ oder die Betriebsbedingungen des besagten Lagers aufzuzeichnen und zu übertragen.

13. Wälzlager nach Anspruch 11 oder 12, **dadurch gekennzeichnet, dass** sich die Auflagefläche (4a) radial erstreckt, wobei die Identifizierungsvorrichtung (5) in etwa in der Ebene P der Seitenfläche zumindest einer Halterung (1, 2) angeordnet ist.

14. Wälzlager nach irgendeinem der Ansprüche 11 bis 13, **dadurch gekennzeichnet, dass** es darüber hinaus eine zweite Dichtvorrichtung mit einem mehrpoligen Magnetgeber umfasst.
